# EUROPÄISCHE PATENTSCHRIFT

(11) **EP 2 889 849 B1**
(45) Veröffentlichungstag und Bekanntmachung des Hinweises auf die Patenterteilung: **25.09.2019**
(21) Anmeldenummer: 14004220.1
(22) Anmeldetag: 15.12.2014
(51) Int. Cl.: G08B 7/06, F21V 23/04, G08B 29/10, H05B 33/08, H05B 37/02

(54) **Leuchte und Verfahren zur Überwachung einer Leuchte**
Lighting fixture and method for monitoring a luminaire
Éclairage et procédé de surveillance d'un éclairage

(30) Priorität: 27.12.2013 DE 102013022118
(43) Veröffentlichungstag der Anmeldung: 01.07.2015
(73) Patentinhaber: Eaton Intelligent Power Limited, Dublin 4 (IE)
(72) Erfinder: Prasuhn, Jürgen, 59494 Soest (DE)
(74) Vertreter: Grünecker Patent- und Rechtsanwälte PartG mbB

(56) Entgegenhaltungen:
- EP-A2- 1 439 120
- WO-A1-2009/107003
- DE-U1-202013 100 078

## Beschreibung

Die Erfindung betrifft eine Leuchte und ein Verfahren zur Überwachung einer solchen Leuchte. Eine solche Leuchte, insbesondere Sicherheits- oder Rettungszeichenleuchte, weist wenigstens ein insbesondere Festkörper-Leuchtmittel und eine Lichtaustrittsfläche auf. Zur Überwachung des Leuchtmittels ist dieser zumindest ein Sensor zugeordnet. Ein entsprechendes Festkörper-Leuchtmittel ist beispielsweise eine LED, ein OLED oder ein PLED. Polymere lichtabgebende Dioden (PLED) sind wie lichtabgebende Polymere oder organische lichtemittierende Dioden (OLED) farbig leuchtende Komponenten beispielsweise für Displays oder dergleichen. Sie unterscheiden sich im Aufbau von einem lichtemittierenden Polymer dadurch, dass sie eine lichtreflektierende Katode haben. Außerdem verwenden die Polymeren LEDs undotierte Polymere, die zwischen zwei Elektroden angebracht sind. Solche insgesamt Festkörper-Leuchtmittel genannten Leuchtmittel werden in immer größerem Umfang für eine Vielzahl von Leuchten eingesetzt, insbesondere auch für Sicherheits- oder Rettungszeichenleuchten. Bei solchen Leuchten ist allerdings zu bedenken, dass diese überwacht werden müssen gemäß entsprechender Normen, wie beispielsweise ISO 3864, EN 50172, IEC/EN 62034 oder gemäß DIN V VDE V 0108-100. Bei den Festkörper-Leuchtmitteln ist eine solche Überwachung mit bekannten Mitteln schwierig oder gar unmöglich.

Beispielsweise erfolgte bisher eine Überwachung mittels Spannungs- oder Strommessungen. Allerdings ist eine solche Messung für Festkörper-Leuchtmittel wenig erfolgversprechend. Dabei ist zu beachten, dass die elektrischen Charakteristika, die sich durch Spannungs- oder Strommessung ergeben, in keinem direkten Zusammenhang mit den optischen Charakteristika solcher Leuchtmittel sind. Das heißt, eine umfassende Überwachung des Status einer solchen Leuchte einschließlich der Funktion der Lichtquelle mittels Spannung und/oder Strom ist insbesondere im Hinblick auf die obengenannten Normen nicht möglich.

Beispielsweise kann sich bei LEDs ergeben, dass der von einer LED erzeugte Lichtstrom bereits relativ schwach ist, während sich durch die Messung von Strom und Spannung noch kein Hinweis auf eine entsprechende Abnahme des Lichtstroms ergibt.

Das heißt, bei den gegenwärtig bekannten Leuchten der obengenannten Art gibt es als einzige Möglichkeit zur Überwachung der Lichtabgabe des entsprechenden Festkörper-Leuchtmittels eine Kombination eines Lichtsensors mit Strom- oder Spannungsmessung, um die Funktionsfähigkeit der Versorgungseinrichtung beziehungsweise des LED-Treibers zu überwachen.

In der DE 10 2011 084 590 A1 wird eine Leuchte mit mehreren LED-Leuchtmitteln beschrieben, bei der eine entsprechende Anzahl von Sensoren zur Erfassung eines Sensorsignals verwendet wird, wobei das entsprechende Sensorsignal eine Leuchtdichte, eine Beleuchtungsstärke oder einen Lichtstrom des LED-Leuchtmittels wiedergibt. Die entsprechenden Sensorsignale werden dabei miteinander verglichen, um eine Abweichung der Betriebsfunktion und insbesondere den Ausfall einer oder mehrerer LED-Leuchtmittel zu erfassen. Die entsprechenden Sensoren müssen in spezifischer Weise relativ zu den Leuchtmitteln angeordnet werden, um entsprechende Erfassungsbereiche für den Lichtstrom zu definieren. Eine mögliche Anordnung besteht beispielsweise in der Anordnung eines Sensors in jedem Eckbereich eines im Wesentlichen rechteckig ausgebildeten Gehäuseteils der Leuchte. Beispiele für entsprechende Sensoren sind in diesem Zusammenhang Fotodioden, Fotowiderstände oder dergleichen.

In der DE 10 2011 008 571 A1 weist eine Leuchte einen ihr zugeordneten Umgebungslichtsensor auf. Über diesen erfolgt ein Messen der Helligkeit von einfallendem Umgebungslicht und auf der Grundlage entsprechender Messwerte erfolgt ein adaptives Steuern des Leuchtmittels in Abhängigkeit von der gemessenen Umgebungshelligkeit d. h. ein Erhöhen oder Vermindern der Strahlungsleistung des Leuchtmittels.

WO 2009/107003 A1 beschreibt eine Beleuchtungseinheit mit einer Lichtquelle, einer transparenten Struktur, einem Fotosensor und einer Ansteuereinheit. Der entsprechende Sensor dient beispielsweise zur Überwachung einer LED als Lichtquelle. Der Sensor ist als dünne Schicht ausgebildet und im Lichtweg des entsprechenden Leuchtmittels angeordnet. WO 2009/107003 A1 offenbart eine Leuchte nach dem Obergriff des Anspruchs 1.

EP 1 439 120 A2 offenbart eine Laterne mit mindestens einem Sensor zur Erfassung der Lichtstärke eines entsprechenden Leuchtmittels. Ein solches Leuchtmittel kann mindestens eine LED sein. Die Lichtstärke des abgestrahlten Lichts kann ständig oder regelmäßig in Abhängigkeit von der erfassten Lichtstärke einer Anpassung unterliegen. Dabei besteht ebenfalls die Möglichkeit, dass bei ausgeschaltetem Leuchtmittel Fremdlicht erfasst und dies zur Berücksichtigung der tatsächlichen Lichtstärke des Leuchtmittels berücksichtigt wird.

Aufgabe vorliegender Erfindung ist, eine Leuchte und ein Verfahren der eingangs genannten Art dahingehend zu verbessern, dass in kostengünstiger Weise und mit wenig konstruktivem Aufwand eine sichere Möglichkeit zur Überwachung von insbesondere Festkörper-Leuchtmitteln gegeben ist, die allen normativen Anforderungen genügt und gleichzeitig das Erscheinungsbild der Leuchte, insbesondere Sicherheits- oder Rettungszeichenleuchte, nicht beeinflusst.

Diese Aufgabe wird durch die Merkmale der unabhängigen Ansprüche gelöst. Erfindungsgemäß ist der Sensor als im Lichtweg des Leuchtmittels angeordnete, transparente Sensorfolie ausgebildet. Mittels der Sensorfolie wird die Lichtabgabe des Leuchtmittels überwacht. Die Sensorfolie kann an entsprechender Stelle innerhalb des Lichtwegs zwischen Leuchtmittel und Lichtaustrittsfläche angeordnet sein. Werden beispielsweise Reflektionseinrichtungen oder dergleichen verwendet, kann die Sensorfolie der Reflektionseinrichtung zugeordnet sein. Dadurch wird auf die Reflektionseinrichtung eingestrahltes Licht erfasst und durch die Sensorfolie in ein entsprechendes Signal umgesetzt. Die Sensorfolie kann auch an anderen Stellen innerhalb des Lichtwegs angeordnet sein. Die Sensorfolie ist als insbesondere dünne und transparente Spannungserzeugungsfolie ausgebildet. Das heißt, durch die entsprechende Sensorfolie ist nicht nur das entsprechende Leuchtmittel überwachbar, sondern gleichzeitig wird durch eingestrahltes Licht von dem Leuchtmittel oder auch von der Umgebung eine Spannung mittels der Sensorfolie erzeugt, die zur Versorgung der Leuchte zumindest ergänzend einsetzbar ist. Eine solche Spannungserzeugungsfolie beruht beispielsweise auf der umgekehrten OLED-Technologie, die für Solarzellen einsetzbar ist. Solche Spannungserzeugungsfolien sind transparente Folien mit einer hohen Transparenz, die nahezu beliebig in Größe oder Form herstellbar sind.

Das heißt, die Spannungserzeugungsfolie kann auch eine insbesondere biegsame OPV-Solarfolie sein, wobei OPV sich auf die organische Photovoltaik bezieht. Dies sind biegsame und leichte Solarmodule in Folienform die aus organischen Halbleitern hergestellt werden. Andere Spannungserzeugungsfolien, die auch als Solarfolien in der Photovoltaik einsetzbar sind, weisen beispielsweise organische Moleküle oder Polymere auf, wobei diese Folien ebenfalls hochtransparent sind und bereits Wirkungsgrade von 10% oder mehr aufweisen.

Zur elektrischen Kontaktierung der Sensorfolie sowie auch anderer elektrischer Einrichtungen, die insbesondere der Lichtaustrittsfläche zugeordnet sind, ein transparentes und leitfähiges Material insbesondere in Form einer Beschichtung verwendet werden. Ein Beispiel für ein solches Material ist Indiumzinnoxid (ITO). Dies ist ein halbleitender, in sichtbarem Licht weitgehend transparenter Stoff. Dieser kann in Form transparenter Elektroden auf der Sensorfolie und/oder auf der Lichtaustrittsfläche aufgetragen werden.

Es ist beispielsweise denkbar, dass die Sensorfolie insbesondere einer die Lichtaustrittsfläche bildenden, transparenten oder opaken Scheibe zugeordnet ist. Eine solche Scheibe kann eine Scheibe aus Glas, Quarz, oder einem durchsichtigen Kunststoffmaterial sein.

Bei Rettungszeichenleuchten wird in der Regel ein Piktogramm verwendet, das einen Fluchtweg anzeigt. In diesem Zusammenhang ist es ebenfalls denkbar, dass die Sensorfolie insbesondere einem an der Lichtaustrittsfläche angeordneten Piktogramm zugeordnet ist. Ein solches Piktogramm kann auch als beispielsweise an der vorangehend genannten Scheibe aufgebrachte Piktogrammfolie oder auch als Piktogrammscheibe ausgebildet sein.

Es wurde bereits darauf hingewiesen, dass solche Folien in nahezu jeglicher Form einsetzbar sind und in einfacher Weise an entsprechende Formen der Lichtaustrittsfläche anpassbar sind. Das bedeutet, dass eine solche Sensorfolie im Wesentlichen die gesamte Lichtaustrittsfläche bedecken kann. Die Folien sind eckig, rund, in entsprechenden Kombinationen von rund und eckig und auch sonst in nahezu beliebiger Form herstellbar.

Um gegebenenfalls nicht die gesamte Lichtaustrittsfläche mit einer entsprechenden Sensorfolie zu bedecken und/oder die Sensorfolie nur bestimmten Bereichen der Lichtaustrittsfläche zuzuordnen, kann die Sensorfolie eine Anzahl von Foliensegmenten aufweisen. Diese sind getrennt voneinander anbringbar und können ebenfalls nahezu beliebige Formen aufweisen. Bei einem Ausführungsbeispiel werden Foliensegmente in Streifenform und beabstandet zueinander angeordnet. Eine Mehrzahl solcher streifenförmiger Foliensegmente ist in Längs- oder Breitenrichtung der entsprechenden Lichtaustrittsfläche beabstandet zueinander anordbar. Es sind auch unterschiedliche Formen von Foliensegmenten kombinierbar, wobei insbesondere im Hinblick auf Rettungszeichenleuchte es ebenfalls denkbar ist, dass die Foliensegmente in einer Form analog zum Piktogramm hergestellt und angeordnet werden.

Die verschiedenen Foliensegmente können insgesamt als Sensor eingesetzt werden, wobei es ebenfalls denkbar ist, dass jedes Foliensegment einen Einzelsensor bildet. Jeder dieser Einzelsensoren kann separat eingesetzt und ausgewertet werden, um beispielsweise nur diesem Einzelsensor zugeordnete Leuchtmittel zu überwachen. Es ist ebenfalls denkbar, dass jedem Leuchtmittel ein entsprechender Einzelsensor in Form eines Foliensegments zugeordnet ist.

Um die entsprechende Sensorfolie beziehungsweise deren Foliensegmente elektronisch zu steuern und auslesen zu können, kann die Leuchte eine Steuereinrichtung in Verbindung mit der Sensorfolie beziehungsweise deren Segmenten aufweisen.

Um gegebenenfalls auch das Umgebungslicht erfassen zu können, kann die Sensorfolie ebenfalls zur Detektion des Umgebungslichts ausgebildet sein. Eine entsprechende Überwachung des Umgebungslichts beziehungsweise eine Beeinflussung des Leuchtmittels im Hinblick auf das Umgebungslicht kann beispielsweise dadurch erfolgen, dass durch die Sensorfolie erst eine entsprechende Messung des Umgebungslichts beispielsweise bei ausgeschaltetem Leuchtmittel der Leuchte erfolgt und anschließend bei eingeschaltetem Leuchtmittel eine erneute Messung stattfindet. Dadurch lässt sich ein Unterschied im Sensorsignal verwenden, um beispielweise die Lichtabgabe des Leuchtmittels bei Dunkelheit oder geringer Helligkeit des Umgebungslichts zu vermindern.

Eine entsprechende Messung kann für jedes Foliensegment durchgeführt werden.

Die Steuereinrichtung der Leuchte kann einer oder mehreren Leuchten zugeordnet sein und kann auch in einer Leuchte integriert sein oder Teil eines bereits in der Leuchte vorhandenen Mikrocontrollers sein. Außerdem kann mittels der Steuereinrichtung eine Übermittlung entsprechender Informationen an ein Lichtmanagementsystem oder dergleichen erfolgen, welches mit der Steuereinrichtung verbunden ist. Eine solche Informationsübermittlung kann über die Spannungsversorgungsleitungen, ein Bus-System, drahtlos oder dergleichen erfolgen.

Außerdem sind durch die Sensorfolie und entsprechende Steuereinrichtung sowohl einzelne Leuchtmittel als auch Gruppen von Leuchtmitteln oder alle Leuchtmittel der Leuchte hinsichtlich ihres Status überwachbar, so dass entsprechende Statusinformationen an beispielsweise eine zentrale Steuereinrichtung des Lichtmanagementsystems übermittelbar sind. Dadurch werden die entsprechenden Anforderungen der eingangs genannten Normen zur Überwachung der Funktion der Leuchten auf regelmäßiger Basis erfüllt.

Wie bereits ausgeführt, dient die Sensorfolie weiterhin dazu die Lichtabgabe der Leuchtmittel beispielsweise im Hinblick auf Umgebungslicht anzupassen oder auch zur Energiegewinnung und damit zumindest zur teilweisen Versorgung der Leuchte.

Bei einer entsprechenden Leuchte besteht weiterhin die Möglichkeit, dass entsprechende Leuchtmittel in unterschiedlicher Funktion angeordnet sind. Beispielsweise kann eine zusätzliche Backlighteinrichtung mit entsprechenden Leuchtmitteln vorgesehen sein. Auch deren Funktion ist durch eine entsprechende Sensorfolie überwachbar, indem beispielsweise innerhalb der Leuchte an unterschiedlichen Stellen verschiedene Sensorfolien für unterschiedliche Leuchtmittel angeordnet sind. Eine solche Sensorfolie kann beispielsweise für die Backlighteinrichtung im Innern der Leuchte vorgesehen sein, während eine weitere Sensorfolie der Lichtaustrittsfläche der Leuchte zugeordnet ist.

Außerdem sind mittels der Sensorfolie nicht nur Ausfälle einzelner Leuchtmittel, sondern auch eine Verminderung der Beleuchtungsstärke aufgrund von Alterungseffekten gerade bei entsprechenden Festkörper-Leuchtmitteln erfassbar, die wiederum bei nur einzelnen Leuchtmitteln oder auch bei allen Leuchtmitteln auftreten können.

Es wurde bereits darauf hingewiesen, dass entsprechende Messungen durch jedes Foliensegment der Sensorfolie durchführbar sind, wobei dies ebenfalls für die bereits erwähnten Spannungsdifferenzen gilt. Außerdem können entsprechende Spannungen der Foliensegmente für in unterschiedlichen Bereichen der Leuchte angeordnete Leuchtmittel erfasst werden. Jede erfasste Spannungsdifferenz kann von der entsprechenden Steuereinrichtung ermittelt oder auch extern abgerufen werden. Weiterhin besteht die Möglichkeit, dass zu vorgegebenen Zeiten eine Übermittlung entsprechender Informationen an eine externe und zentrale Steuereinrichtung beispielsweise eines Lichtmanagementsystems erfolgt.

Erfindungsgemäß ergibt sich somit eine sichere und umfassende Überwachung entsprechender Leuchtmittel einer Leuchte und insbesondere von Festkörper-Leuchtmitteln, die bisher kaum in entsprechender Weise überwachbar sind.

Im Folgenden werden vorteilhafte Ausführungsbeispiele der Erfindung anhand der in der Zeichnung beigefügten Figuren näher erläutert und beschrieben.

Es zeigen:
- Figuren 1 bis 3: unterschiedliche Ausführungsbeispiele von Leuchten mit einer Sensorfolie als Sensor;
- Figur 4: ein erstes Ausführungsbeispiel einer Sensorfolie für eine Leuchte;
- Figur 5: ein zweites Ausführungsbeispiel für eine Sensorfolie einer Leuchte;
- Figur 6: ein drittes Ausführungsbeispiel für eine Sensorfolie einer Leuchte;
- Figur 7: ein viertes Ausführungsbeispiel einer Sensorfolie für einer Leuchte;
- Figur 8: ein fünftes Ausführungsbeispiel einer Sensorfolie für einer Leuchte, und
- Figur 9: einen Schnitt entlang einer Linie IX-IX aus Figur 7 in prinzipieller Darstellung.

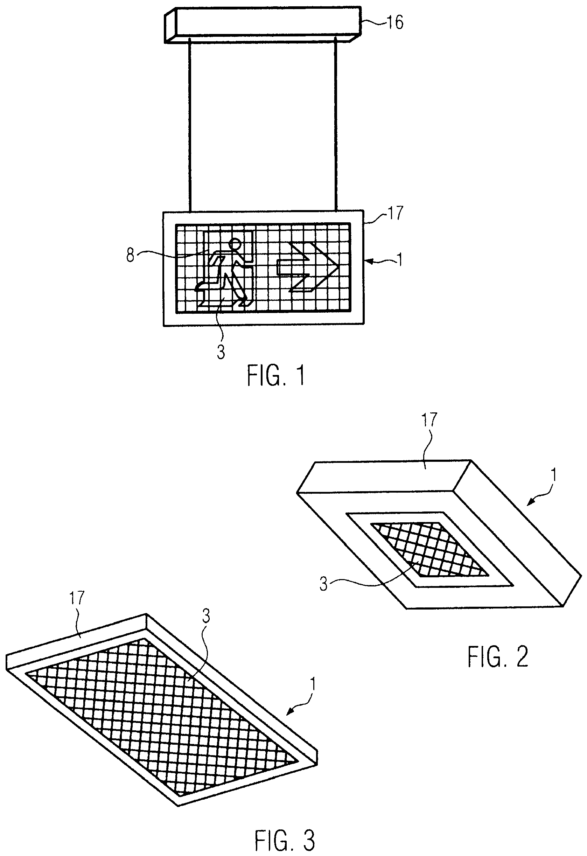

Die Figuren 1 bis 3 zeigen verschiedene Ausführungsbeispiele von Leuchten mit einer entsprechenden Sensorfolie, siehe auch die folgenden Figuren.

Figur 1 zeigt eine Rettungszeichenleuchte 1 mit einem Gehäuse beziehungsweise Rahmen 17, der eine entsprechende Lichtaustrittsfläche 3 umrandet. Diese Lichtaustrittsfläche 3 ist zur Hervorhebung mit einer Rasterung versehen, die allerdings bei der tatsächlichen Leuchte nicht vorhanden ist. Eine entsprechende Lichtaustrittsfläche 3 ist ebenso auf der gegenüberliegenden Seite der Leuchte 1 angeordnet, so dass ein entsprechendes Piktogramm 8 von beiden Seiten sichtbar ist und einen Fluchtweg kennzeichnet. Die Leuchte 1 ist eine Pendelleuchte mit einer Deckenaufhängung 16.

Die Leuchte 1 nach Figur 2 ist eine Deckeneinbauleuchte und insbesondere eine Notleuchte. Diese weist ein Gehäuse 17 auf, das eine nach unten weisende Lichtaustrittsfläche 3 beinhaltet. Diese ist ebenfalls durch eine Rasterung hervorgehoben, wobei diese Rasterung in den Figuren 1 bis 3 nur zur Hervorhebung und Kennzeichnung der Lichtaustrittsfläche 3 verwendet wird, allerdings in keiner Weise tatsächlich auf der Lichtaustrittsfläche 3 angeordnet ist.

Figur 3 zeigt ein weiteres Ausführungsbeispiel für eine Leuchte 1, die flacher als die entsprechende Notleuchte nach Figur 2 aufgebaut ist. Diese weist ebenfalls ein Gehäuse beziehungsweise einen Rahmen 17 auf, der eine Lichtaustrittsfläche 3 umrandet.

Die Leuchten nach Figuren 1 bis 3 sind nur beispielhaft und sind insbesondere Sicherheits-, Not- beziehungsweise Rettungszeichenleuchten, wobei andere Leuchten erfindungsgemäß verwendbar sind. Solche Leuchten weisen an der entsprechenden Lichtaustrittsfläche in der Regel eine klare oder opake Scheibe auf, auf der beispielsweise mittels Siebdruck ein Piktogramm ausgebildet sein kann.

Die dargestellten Gehäuse beziehungsweise Aufhängungen für die Leuchte sind ebenfalls nur beispielhaft und es sind andere Aufhängungen und Gehäuse sowie auch andere Lichtaustrittsflächen möglich.

Im Folgenden wird insbesondere im Hinblick auf die Leuchte nach Figur 1 eine entsprechende Sensorfolie beschrieben, die analog auch für die anderen Leuchten nach Figuren 2 und 3 oder weitere nicht dargestellte Leuchten einsetzbar ist.

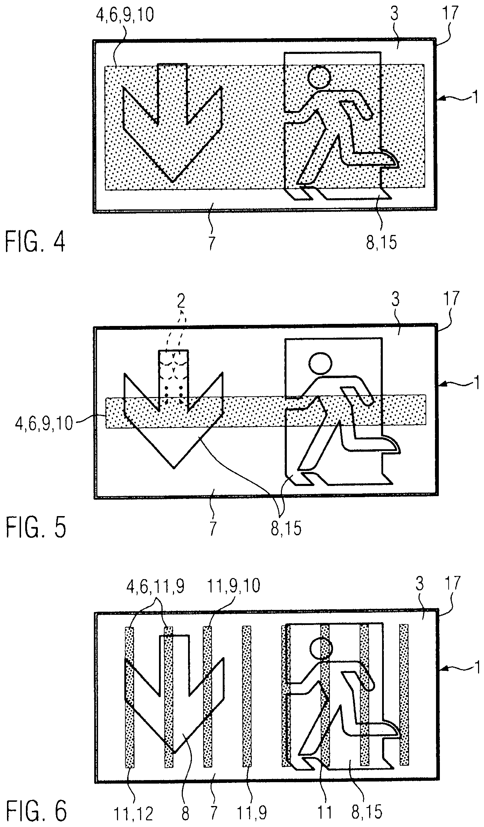

In Figur 4 ist eine Seitenansicht einer Rettungszeichenleuchte 1 nach Figur 1 dargestellt. Diese weist ein rahmenartiges Gehäuse 17 auf, das eine Lichtaustrittsfläche 3 umgibt. Dieser Lichtaustrittsfläche 3 kann eine transparente oder opake Scheibe 7 zugeordnet sein. Diese ist beispielsweise aus Glas, Keramik oder einem anderen transparenten Material. Auf der Lichtaustrittsfläche 3 ist einerseits ein Piktogramm 8 beispielsweise in Form einer Piktogrammfolie 15 angeordnet und andererseits ein Sensor 4 in Form einer Sensorfolie 6. Diese hat eine im Wesentlichen rechteckförmige Form und bedeckt den größten Teil der Lichtaustrittsfläche 3. Die Sensorfolie 6 kann bei einigen Ausführungsbeispielen gleichzeitig eine Spannungserzeugungsfolie 9 in Form beispielsweise einer OPV-Solarfolie 10 sein. Eine solche Sensor- beziehungsweise Spannungserzeugungsfolie 6, 9 weist organische Halbleiter auf und ist dünn, biegsam und transparent. Entsprechende Spannungserzeugungsfolien sind bisher bei der organischen Photovoltaik im Einsatz. Sie lassen sich vergleichsweise einfach und kostengünstig herstellen in Form von dünnen, biegsamen und transparenten Folien fast beliebiger Größe. Die entsprechenden Materialien der Folien sind beispielsweise organische Halbleiter, organische Halbleiterpolymere und dergleichen.

Bei einem weiteren Ausführungsbeispiel nach Figur 5 ist die Sensorfolie 6 streifenförmig in etwa mittig zur Lichtaustrittsfläche 3 angeordnet. Auch in diesem Fall kann die Sensorfolie 6 als Spannungserzeugungsfolie und insbesondere OPV-Solarfolie 10 eingesetzt werden, wobei OPV für organische Photovoltaik steht.

Das entsprechende Piktogramm 8 kann durch Sieb- oder Rastersiebdruck direkt auf der entsprechenden Scheibe 7 aufgebracht werden oder auch als eigene Piktogrammfolie 15. Ebenfalls denkbar ist, dass das Piktogramm auf einer separaten Scheibe angeordnet ist, die beispielsweise der Scheibe 7 vor- oder nachgeordnet ist.

In Figur 6 ist die entsprechende Sensorfolie 6 aus einer Anzahl von Foliensegmenten 11 gebildet. Diese sind streifenförmig nebeneinander in Höhenrichtung der entsprechenden Leuchte angeordnet. Die Länge eines jeden Foliensegments 11 wie auch dessen Breite ist für alle Segmente gleich.

Auch hier kann jedes Foliensegment separat als Sensor 4 ausgebildet sein und ebenfalls aus einer Spannungserzeugungsfolie 9 beziehungsweise OPV-Solarfolie 10 gebildet sein. Für das Piktogramm 8 gelten die vorangehend gemachten Anmerkungen.

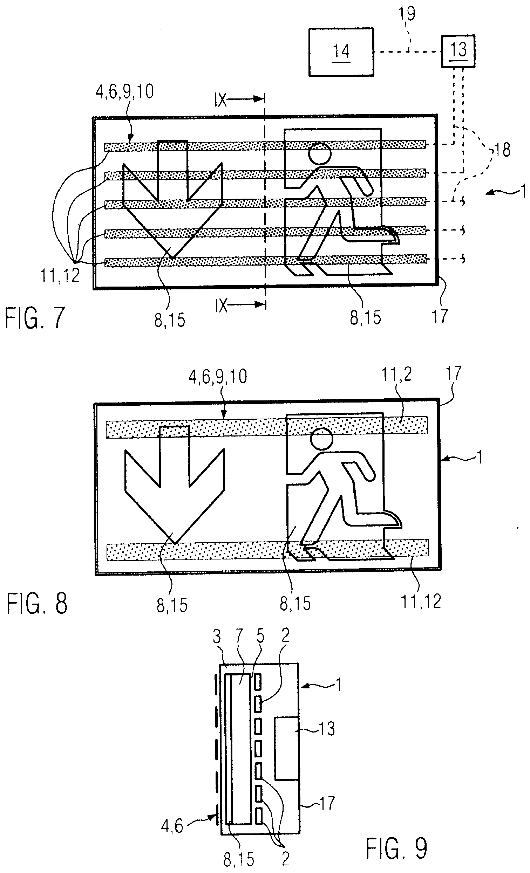

In Figur 7 ist die Sensorfolie 6 ebenfalls durch Foliensegmente 11 gebildet. Diese sind streifenförmig übereinander mit jeweils gleicher Länge und gleicher Breite angeordnet.

In Figur 7 ist insbesondere dargestellt, dass die Sensorfolie 6 beziehungsweise auch jedes Foliensegment 11 mit einer Steuereinrichtung 13 verbunden ist. Die entsprechende Verbindung kann durch aufgedruckte Leiterbahnen oder dergleichen erfolgen. Über diese Verbindungen 18 werden die entsprechenden Sensoren ausgelesen und Rückschlüsse auf die Lichtabgabe der verschiedenen Leuchtmittel werden gewonnen, siehe hierzu auch die in Figur 5 dargestellten Leuchtmittel 2. Die Leuchtmittel 2 nach Figur 5 sind nur prinzipiell dargestellt und sind insbesondere Festkörper-Leuchtmittel, wie LEDs, OLEDs oder dergleichen.

Die Anordnung der entsprechenden Leuchtmittel kann ebenfalls in Reihen und Spalten oder auch gruppenweise erfolgen, wobei auch eine Anordnung in Form von Streifen oder Bändern möglich ist.

Die Anordnung der Sensorfolie beziehungsweise der Foliensegmente 11 erfolgt im Wesentlichen passend zur Anordnung der Leuchtmittel 2, so dass diese einzeln, gruppenweise oder auch entlang von Spalten und Reihen überwachbar sind. Die entsprechenden Sensoren 4 gemäß vorliegender Anmeldung sind dabei aufgrund ihrer Transparenz und ihres Aufbaus zur Erfassung von Licht in beiden Richtungen beziehungsweise über beide Oberflächen ausgebildet. Dabei wird ein Signal entsprechend zur erfassten Lichtmenge über eine Verbindungsleitung 18 an die Steuereinrichtung 13 abgegeben. Durch die Steuereinrichtung 13 ist dann für jedes Foliensegment 11 als Einzelsensor 12 die entsprechende Lichtmenge erfassbar und es können Rückschlüsse auf sowohl das Umgebungslicht als auch die Lichtabgabe der verschiedenen Leuchtmittel 2 getroffen werden. Die Steuereinrichtung 13 kann mehreren Leuchten 1 zugeordnet, in dieser angeordnet, beziehungsweise durch einen Mikroncontroller einer Leuchte 1 gebildet sein.

Zur Überwachung der Leuchte insbesondere im Hinblick auf Normen wie ISO 3864, EN 50172, IEC/EN 62034 oder DIN V VDE V 0108-100 werden erfindungsgemäß die entsprechenden Sensorfolien beziehungsweise Foliensegmente als Einzelsensoren eingesetzt, um so die Lichtabgabe der verschiedenen Leuchtmittel zu überprüfen.

Die entsprechenden Informationen sind dann über eine Verbindung 19 an eine zentrale Steuereinrichtung beispielsweise in Form eines Lichtmanagementsystems 14 übertragbar. Die Übertragung kann durch Aufmodulieren entsprechender Informationen auf die Spannung, durch Übertragung über ein Bus-System oder auch mittels einer drahtlosen Übertragung erfolgen.

Entsprechende Einrichtungen nach Figur 7 beziehungsweise Leuchtmittel nach Figur 5 sind bei allen in den Figuren dargestellten Leuchten eingesetzt.

Figur 8 zeigt ein weiteres Ausführungsbeispiel einer Leuchte 1, bei der zwei streifenförmige Foliensegmente 11 der Sensorfolie 6 dargestellt sind. Diese befinden sich in einem oberen und einem unteren Bereich der Lichtaustrittsfläche 3. Analog ist wiederum das Piktogramm 8 beispielsweise durch eine Piktogrammfolie 15 oder ein aufgedrucktes Piktogramm gebildet. Auch hier erfolgt die entsprechende Abfrage der Einzelsensoren 12 über nichtdargestellte Verbindungsleitungen 18, eine Steuereinrichtung 13, und Übermittlung der Informationen an ein Lichtmanagementsystem 14, siehe hierzu Figur 7.

In Figur 9 ist ein Schnitt entlang der Linie IX-IX aus Figur 7 im Prinzip dargestellt. Die Leuchte 1 weist ein Gehäuse beziehungsweise einen Rahmen 17 auf, der insbesondere die entsprechende Lichtaustrittsfläche 3 umgibt. Der Lichtaustrittsfläche 3 ist beispielsweise eine transparente oder opake Scheibe 7 zugeordnet. Diese Scheibe 7 weist ein Piktogramm 8 auf beziehungsweise dient zur Befestigung einer Piktogrammfolie 15. Der Lichtaustrittsfläche 3 ist weiterhin eine Sensorfolie 6 in Form von Einzelsensoren 12 beziehungsweise Foliensegmenten 11 zugeordnet. Diese verlaufen streifenförmig beabstandet übereinander. Im Inneren des Gehäuses 17 beziehungsweise des Rahmens 17 ist eine Mehrzahl von Festkörper-Leuchtmitteln 2 angeordnet. Diese können zur ausreichenden Ausleuchtung des Piktogramms in Gruppen, Streifen, rasterförmig oder dergleichen angeordnet sein. Zwischen den Festkörper-Leuchtmitteln 2 und der Lichtaustrittsfläche 3 erstreckt sich ein entsprechender Lichtweg 5 entlang welchem Licht von den Leuchtmitteln 2 zur Lichtaustrittsfläche 3 übertragen wird. In diesem Lichtweg 5 sind die entsprechenden Einzelsensoren 12 beziehungsweise ist die Sensorfolie 6 angeordnet.

Die Anordnung der entsprechenden Sensorfolie 6 nach Figur 9 ist nur beispielhaft, wobei die Sensorfolie 6 beispielsweise auch zwischen Piktogrammfolie 15 und Scheibe 7 oder auch auf einer Innenseite der Scheibe 7, das heißt zwischen Leuchtmitteln 2 und Scheibe 7 angeordnet sein kann. Andere Anordnungen sind ebenfalls möglich, wenn beispielsweise eine Reflektionseinrichtung im Inneren der Leuchte 1 verwendet wird. In diesem Zusammenhang und insbesondere bei indirekter Lichtausstrahlung aus dem Gehäuse 17 über die Reflektionseinrichtung, kann die Sensorfolie 6 auch der Reflektionseinrichtung und insbesondere einer entsprechenden reflektierenden Fläche zugeordnet sein.

Bei dem Ausführungsbeispiel nach Figur 9 ist die Steuereinrichtung 13 innerhalb der Leuchte 1 angeordnet und beispielsweise in dem Mikrocontroller der Leuchte integriert.

Es besteht ebenfalls die Möglichkeit, dass die Sensorfolie 6 als Piktogrammfolie 15 verwendet wird, das heißt, dass das entsprechende Piktogramm direkt auf der Sensorfolie 6 durch beispielsweise Siebdruck aufgebracht ist.

Da die erfindungsgemäße Sensorfolie 6 auch eine spannungserzeugende Folie 9 beziehungsweise OPV-Solarfolie 10 sein kann, dient diese gleichzeitig zur Energiegewinnung, die zur elektrischen Versorgung der Leuchte eingesetzt werden kann oder den Ladevorgang der Batterie einer Einzelbatterienotleuchte unterstützt.

Durch die Sensorfolie 6 ist ebenfalls Umgebungslicht detektierbar, indem beispielsweise die entsprechenden Leuchtmittel der Leuchte 1 zuerst ausgeschaltet sind und nur Umgebungslicht durch die Sensorfolie 6 detektiert wird. Danach können die Leuchtmittel eingeschaltet werden und es wird zusätzlich zum Umgebungslicht von den Leuchtmitteln abgegebenes Licht erfasst. Aus der entsprechenden Differenz der beiden Messungen ergibt sich die von den Leuchtmitteln abgegebene Lichtmenge. Außerdem kann nach Detektion des Umgebungslichts durch die Steuereinrichtung 13 beispielsweise bei hellem Umgebungslicht die Lichtabgabe der Leuchtmittel erhöht werden, damit auch in einer hellen Umgebung die entsprechenden Sicherheits- beziehungsweise Rettungszeichenleuchten gut sichtbar sind. In einer dunklen Umgebung, das heißt bei wenig oder keinem Umgebungslicht kann dagegen die Lichtabgabe der Leuchtmittel entsprechende reduziert werden, da auch bei einer geringen Lichtabgabe die Leuchte gut sichtbar ist.

Erfindungsgemäß ergibt sich eine Leuchte beziehungsweise ein Verfahren zur Überwachung der Leuchte mit einem einfachen Aufbau, bei dem die Leuchtmittel und insbesondere Festkörper-Leuchtmittel überwachbar sind, um im Hinblick auf Sicherheits- und Rettungszeichenleuchten in entsprechende Normen vorgeschriebene Überwachungen zu ermöglichen. So kann auch für einzelne Leuchtmittel der Leuchte eine Abweichung vom Normalbetrieb festgestellt werden, beziehungsweise eine alterungsbedingte Verringerung der Lichtabgabe eines Leuchtmittels.

Erfindungsgemäß wird die Sensorfolie auch zur Energiegewinnung eingesetzt, wobei diese Energiegewinnung sowohl hinsichtlich des Umgebungslichts als auch hinsichtlich der Lichtabgabe der Leuchten eigenen Leuchtmittel gegeben ist.

Die erfindungsgemäße Leuchte ist ebenfalls als rahmenlose Leuchte einsetzbar. Bei dieser ist bspw. ein entsprechendes Piktogramm in einem Acrylglas oder dergleichen eingelassen, wobei ebenfalls weitere Ausführungsbeispiele für solche rahmenlosen Leuchten möglich sind.

## Patentansprüche

1. Leuchte (1), insbesondere Sicherheits- oder Rettungszeichenleuchte, mit wenigstens einem insbesondere Festkörper-Leuchtmittel, SSL, (2) und einer Lichtaustrittsfläche (3), wobei zur Überwachung des SSL diesem Leuchtmittel (2) zumindest ein Sensor (4) zugeordnet ist, wobei
der Sensor (4) als im Lichtweg (5) des SSL (2) angeordnete, transparente Sensorfolie (6) ausgebildet ist, wobei
die Sensorfolie (6) als dünne, transparente Spannungserzeugungsfolie (9) ausgebildet ist und insbesondere eine insbesondere biegsame OPV-Solarfolie (10) ist
**dadurch gekennzeichnet, dass**
die Leuchte derart gestaltet ist, dass die durch die Sensorfolie (6) erzeugte Spannung gleichzeitig zur Versorgung der Leuchte zumindest ergänzend einsetzbar ist.

2. Leuchte nach Anspruch 1,
**dadurch gekennzeichnet,**
**dass** die Sensorfolie (6) insbesondere einer die Lichtaustrittsfläche (3) bildenden, transparenten oder opaken Scheibe (7) zugeordnet ist.

3. Leuchte nach Anspruch 1 oder 2,
**dadurch gekennzeichnet,**
**dass** die Sensorfolie (6) einem insbesondere an der Lichtaustrittsfläche (3) angeordneten Piktogramm (8) zugeordnet ist.

4. Leuchte nach einem der vorangehenden Ansprüche,
**dadurch gekennzeichnet,**
**dass** die Sensorfolie (6) im Wesentlichen die gesamte Lichtaustrittsfläche (3) bedeckt.

5. Leuchte nach einem der vorangehenden Ansprüche,
**dadurch gekennzeichnet,**
**dass** die Sensorfolie (6) eine Mehrzahl von Foliensegmenten (11) aufweist, wobei die Foliensegmente (11) insbesondere streifenförmig und gegebenenfalls beabstandet zueinander angeordnet sind.

6. Leuchte nach einem der vorangehenden Ansprüche,
**dadurch gekennzeichnet,**
**dass** jedes Foliensegment (11) einen Einzelsensor (12) bildet.

7. Leuchte nach einem der vorangehenden Ansprüche,
**dadurch gekennzeichnet,**
**dass** die Leuchte (1) eine Steuereinrichtung (13) in Verbindung mit der Sensorfolie (6) aufweist, welche Steuereinrichtung (13) insbesondere mit einem Lichtmanagementsystem (14) oder dergleichen verbunden ist.

8. Leuchte nach einem der vorangehenden Ansprüche,
**dadurch gekennzeichnet,**
**dass** die Sensorfolie (6) zur Erfassung von Umgebungslicht ausgebildet ist.

9. Leuchte nach einem der vorangehenden Ansprüche,
**dadurch gekennzeichnet,**
**dass** unterschiedlichen Stellen innerhalb der Leuchte (1) mit entsprechenden Leuchtmitteln unterschiedliche Sensorfolien (6) beziehungsweise Foliensegmente (11) zugeordnet sind.

10. Leuchte nach einem der vorangehenden Ansprüche,
**dadurch gekennzeichnet,**
**dass** die Sensorfolie (6) als Piktogrammfolie (15) ausgebildet ist.

11. Leuchte nach einem der vorangehenden Ansprüche, **dadurch gekennzeichnet, dass** zur Kontaktierung der Sensorfolie (6) insbesondere ITO-Leiterbahnen auf der Sensorfolie (6) und/oder der Lichtaustrittsfläche (3) angeordnet sind.

12. Verfahren zur Überwachung einer Leuchte (1), insbesondere einer Sicherheits- oder Rettungszeichenleuchte, welche Leuchte wenigstens ein insbesondere Festkörper-Leuchtmittel (2) und eine Lichtaustrittsfläche (3) aufweist, wobei zur Überwachung des Leuchtmittels zumindest eine Sensorfolie im Lichtweg des Leuchtmittels angeordnet ist, wobei die Sensorfolie zumindest eine erste Spannung bei Umgebungslicht und ausgeschaltetem Leuchtmittel (2) und eine zweite Spannung bei Umgebungslicht und eingeschaltetem Leuchtmittel (2) erzeugt und eine Spannungsdifferenz zwischen erster und zweiter Spannung als Statusindikator des Leuchtmittels (2) ausgewertet wird, wobei die Sensorfolie (6) als dünne, transparente Spannungserzeugungsfolie (9) ausgebildet ist und insbesondere eine insbesondere biegsame OPV-Solarfolie (10) ist
**gekennzeichnet durch**
ein zumindest ergänzendes Einsetzen der durch die Sensorfolie (6) erzeugten Spannung gleichzeitig zur Versorgung der Leuchte.

13. Verfahren nach Anspruch 12,
**dadurch gekennzeichnet,**
**dass** die Sensorfolie eine Mehrzahl von Foliensegmenten aufweist und die Spannungsdifferenz für jedes Foliensegment ermittelt wird, wobei insbesondere die Spannungsdifferenz für die Lichtaustrittsfläche (3) und/oder für eine der Leuchte zugeordnete Backlighteinrichtung ermittelt wird.

14. Verfahren nach einem der vorangehenden Ansprüche 12 oder 13,
**dadurch gekennzeichnet,**
**dass** die Spannungsdifferenz von einer der Leuchte (1) zugeordneten Steuereinrichtung (13) ermittelt und extern abgerufen und/oder an eine externe Zentralsteuereinrichtung insbesondere eines Lichtmanagementsystems (14) übermittelt wird.

## Claims

1. A luminaire (1), in particular a safety or escape sign luminaire, with at least one solid-state lamp, SSL, (2) in particular, and a light exit area (3), wherein at least one sensor (4) is assigned to this lamp (2) for monitoring the SSL, wherein
the sensor (4) is configured as a transparent sensor film (6) disposed in the optical path (5) of the SSL (2), wherein
the sensor film (6) is configured as a thin, transparent voltage-generating film (9), and is in particular a more specifically flexible OPV solar film (10),
**characterized in that**
the luminaire is designed in such a manner that the voltage generated by the sensor film (6) can be used at the same time for supplying the luminaire at least complementarily.

2. The luminaire according to claim 1,
**characterized in that**
the sensor film (6) is assigned in particular to a transparent or opaque panel (7) forming the light exit area (3).

3. The luminaire according to claim 1 or 2,
**characterized in that**
the sensor film (6) is assigned to a pictogram (8) arranged in particular on the light exit area (3).

4. The luminaire according to one of the afore-mentioned claims,
**characterized in that**
the sensor film (6) substantially covers the whole light exit area (3).

5. The luminaire according to one of the afore-mentioned claims,
**characterized in that**
the sensor film (6) comprises a plurality of film segments (11), wherein the film segments (11) are arranged in particular in strips and, where appropriate, spaced-apart from one another.

6. The luminaire according to one of the afore-mentioned claims,
**characterized in that**
each film segment (11) forms an individual sensor (12).

7. The luminaire according to one of the afore-mentioned claims,
**characterized in that**
the lamp (1) comprises a control device (13) in combination with the sensor film (6), said control device (13) being connected in particular to a light management system (13) or the like.

8. The luminaire according to one of the afore-mentioned claims,
**characterized in that**
the sensor film (6) is configured to detect ambient light.

9. The luminaire according to one of the afore-mentioned claims,
**characterized in that**
different sensor films (6) or film segments (11) are assigned to different places within the luminaire (1) with corresponding lamps.

10. The luminaire according to one of the afore-mentioned claims,
**characterized in that**
the sensor film (6) is configured as a pictogram film (15).

11. The luminaire according to one of the afore-mentioned claims, **characterized in that** ITO-circuit paths in particular are arranged on the sensor film (6) and/or the light exit area (3) for contacting the sensor film (6).

12. A method for monitoring a luminaire (1), in particular a safety or escape sign luminaire, said luminaire comprising at least a solid-state lamp (2) and a light exit area (3), wherein at least one sensor film is arranged in the optical path of the lamp for monitoring the lamp, wherein the sensor film generates at least a first voltage in ambient light and in the switched-off state of the lamp (2) and a second voltage in ambient light and in the switched-on state of the lamp (2), and a voltage difference between the first and the second voltage is evaluated as a status indicator of the lamp (2), wherein the sensor film (6) is configured as a thin, transparent voltage-generating film (9) and in particular a more specifically flexible OPV solar film (10),
**characterized by**
an at least complementary use of the voltage generated by the sensor film (6) for simultaneously supplying the luminaire.

13. The method according to claim 12,
**characterized in that**
the sensor film comprises a plurality of film segments and the voltage difference is evaluated for each film segment, wherein the voltage difference is evaluated in particular for the light exit area (3) and/or for a backlight device assigned to the luminaire.

14. The method according to one of the afore-mentioned claims 12 or 13,
**characterized in that**
the voltage difference is evaluated by a control device (13) assigned to the luminaire (1) and is externally retrieved and/or transmitted to an external central control unit, in particular of a light management system (14).

## Revendications

1. Luminaire d'éclairage (1), notamment luminaire d'éclairage de sécurité ou luminaire d'indication de secours, comprenant au moins un moyen d'éclairage notamment à semi-conducteur ou à corps solide dit SSL (de solid state lighting) (2), et une surface de sortie de lumière (3), luminaire d'éclairage
dans lequel pour la surveillance ou le contrôle du moyen d'éclairage SSL, au moins un capteur (4) est associé à ce moyen d'éclairage (2),
dans lequel le capteur (4) est réalisé sous la forme d'une feuille de capteur (6) transparente, agencée dans le parcours lumineux (5) du moyen d'éclairage SSL (2), et dans lequel la feuille de capteur (6) est réalisée sous la forme d'une feuille mince, transparente, génératrice de tension (9), et est notamment un film solaire OPV (photovoltaïque organique) (10) notamment flexible, **caractérisé**
**en ce que** le luminaire est conçu de manière telle, que la tension produite par la feuille de capteur (6) puisse être simultanément utilisée pour alimenter le luminaire d'éclairage, au moins en complément.

2. Luminaire d'éclairage selon la revendication 1, **caractérisé en ce que** la feuille de capteur (6) est associée notamment à une vitre (7) opaque ou transparente, formant la surface de sortie de lumière (3).

3. Luminaire d'éclairage selon la revendication 1 ou la revendication 2, **caractérisé en ce que** la feuille de capteur (6) est associée à un pictogramme (8) agencé notamment sur la surface de sortie de lumière (3).

4. Luminaire d'éclairage selon l'une des revendications précédentes, **caractérisé en ce que** la feuille de capteur (6) recouvre sensiblement la totalité de la surface de sortie de lumière (3).

5. Luminaire d'éclairage selon l'une des revendications précédentes, **caractérisé en ce que** la feuille de capteur (6) présente une pluralité de segments de feuille (11), les segments de feuille (11) étant notamment réalisés sous forme de bandes et, le cas échéant, agencés à distance les uns des autres.

6. Luminaire d'éclairage selon l'une des revendications précédentes, **caractérisé en ce que** chaque segment de feuille (11) forme un capteur individuel (12).

7. Luminaire d'éclairage selon l'une des revendications précédentes, **caractérisé en ce que** le luminaire d'éclairage (1) comprend un dispositif de commande (13) en liaison avec la feuille de capteur (6), ledit dispositif de commande (13) étant notamment relié à un système de gestion de lumière (14) ou similaire.

8. Luminaire d'éclairage selon l'une des revendications précédentes, **caractérisé en ce que** la feuille de capteur (6) est réalisée pour permettre la capture de lumière ambiante.

9. Luminaire d'éclairage selon l'une des revendications précédentes, **caractérisé en ce qu'**à différents endroits à l'intérieur du luminaire d'éclairage (1) avec des moyens d'éclairage correspondants, sont associées différentes feuilles de capteur (6) ou sont associés respectivement différents segments de feuille (11).

10. Luminaire d'éclairage selon l'une des revendications précédentes, **caractérisé en ce que** la feuille de capteur (6) est réalisée sous la forme d'une feuille de pictogramme (15).

11. Luminaire d'éclairage selon l'une des revendications précédentes, **caractérisé en ce que** pour assurer le contact avec la feuille de capteur (6), notamment des pistes conductrices d'oxyde d'étain-indium (ITO) sont agencées sur la feuille de capteur (6) et/ou la surface de sortie de lumière (3).

12. Procédé pour assurer le contrôle ou la surveillance d'un luminaire d'éclairage (1), notamment d'un luminaire d'éclairage de sécurité ou luminaire d'indication de secours, ledit luminaire d'éclairage comprenant au moins un moyen d'éclairage à semi-conducteur ou à corps solide (2), et une surface de sortie de lumière (3), procédé
d'après lequel pour la surveillance ou le contrôle du moyen d'éclairage, au moins une feuille de capteur est agencée dans le parcours lumineux du moyen d'éclairage, et
d'après lequel la feuille de capteur produit au moins une première tension en présence de lumière ambiante et du moyen d'éclairage (2) à l'arrêt, et une deuxième tension en présence de lumière ambiante et du moyen d'éclairage (2) en marche, et une différence de tension entre la première et la deuxième tension est exploitée en tant qu'indicateur de statut du moyen d'éclairage (2),
et d'après lequel la feuille de capteur (6) est réalisée sous la forme d'une feuille mince, transparente, génératrice de tension (9), et est notamment un film solaire OPV (photovoltaïque organique) (10), notamment flexible,
**caractérisé**
**par** une utilisation, au moins en complément, de la tension produite par la feuille de capteur (6) simultanément pour alimenter le luminaire d'éclairage.

13. Procédé selon la revendication 12, **caractérisé en ce que** la feuille de capteur présente une pluralité de segments de feuille, et **en ce que** l'on détermine la différence de tension pour chaque segment de feuille, à savoir que l'on détermine notamment la différence de tension pour la surface de sortie de lumière (3) et/ou pour un système de rétroéclairage associé au luminaire d'éclairage.

14. Procédé selon l'une des revendications précédentes 12 ou 13, **caractérisé en ce que** la différence de tension est déterminée par un dispositif de commande (13) associé au luminaire d'éclairage (1), et est appelée par voie externe, et/ou est transférée à un dispositif de commande centralisé externe, notamment d'un système de gestion de lumière (14).
